Europäisches Patentamt

European Patent Office

Office européen des brevets

(19)

(11) **EP 0 918 101 A1**

(12) **EUROPÄISCHE PATENTANMELDUNG**

(43) Veröffentlichungstag:
26.05.1999  Patentblatt 1999/21

(21) Anmeldenummer: 98121809.2

(22) Anmeldetag: 17.11.1998

(51) Int. Cl.⁶: **D01F 2/02**, C08J 5/18,
C08L 1/02, C08B 1/00,
A22C 13/00
// C08L1:02

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 20.11.1997 PL 32328197
17.02.1998 PL 32491098

(71) Anmelder:
• Instytut Wlokien Chemicznych
90-570 Lodz (PL)
• Lurgi Zimmer Aktiengesellschaft
60388 Frankfurt am Main (DE)

(72) Erfinder:
• Struszczyk, Henryk
95-100 Zgierz (PL)
• Wawro, Dariusz
91-404 Lodz (PL)
• Starostka, Pawel
93-030 Lodz (PL)
• Mikolajczyk, Wlodzimierz
90-629 Lodz (PL)
• Urbannowski, Alojzy
92-015 Lodz (PL)

(74) Vertreter:
Fechner, Joachim, Dr.-Ing.
Im Broeltal 118
53773 Hennef (DE)

(54) **Verfahren zur Herstellung cellulosischer Formkörper**

(57)     Das Verfahren zur Herstellung von Formkörpern, wie Fasern, Folien, Schlauchhüllen, Kügelchen und dergl. aus Cellulose ist dadurch gekennzeichnet, daß man (a) die Ausgangscellulose mit Wasser in einem Wasser/Cellulose-Verhältnis von wenigstens 1 bei einer Temperatur in dem Bereich von 100 bis 200°C und unter einem Druck in dem Bereich von 0,1 bis 1,5 MPa hydrothermisch behandelt, (b) die behandelte Cellulose in einer wässrigen Alkalihydroxidlösung bei wenigstens 0°C zu einer homogenen Celluloselösung mit 5 bis 10 Gew.-% Cellulose und maximal 10 Gew.-% Alkalihydroxid löst und (c) die alkalische Celluloselösung formt und durch Berührung mit einer wässrigen Lösung mit 1 bis 30 Gew.-% anorganischer und/oder organischer Säure koaguliert.

EP 0 918 101 A1

**Beschreibung**

Die vorliegende Erfindung betrifft ein Verfahren zur Herstellung von Formkörpern, wie Fasern, Folien, Schlauchhüllen, Kügelchen und anderen Produkten aus Cellulose.

US 4,634,470, JP-B-58-244337 sowie „Polymer Journal", Band 20, S. 447-457 (1988) und „Cellulose Chemistry and Technology", Band 24, S. 23-31, 237-249 (1990) beschreiben ein Verfahren zur Herstellung von Cellulosefasern aus Zellstoff, der nach dem Dampfexplosionsverfahren aufgeschlossen wurde. Bei diesem Verfahren wird die Cellulose zunächst in einem alkalischen oder sauren Medium behandelt, um ein Polymerprodukt mit einem mittleren Polymerisationsgrad von 200-700 zu erhalten. Dann wird dieses Polymere einer Dampfexplosionsbehandlung bei Temperaturen in dem Bereich von 100 bis 350°C unter Drucken von 1,01 bis 2,53 MPa unterworfen. Die behandelte Cellulose löst sich in einer wäßrigen Alkalilösung, aus der durch Koagulation in einem sauren Koagulationsbad Fasern hergestellt werden können. Dieses Verfahren ergibt keine modifizierte Cellulose mit genügend hoher Löslichkeit in alkalischen Lösungen. Außerdem ist das Verfahren technologisch und mechanisch kompliziert und energieaufwendig.

Aus PL-167776 und PL-167519 sowie aus FI-911408 und 910990 ist ein Verfahren zur Herstellung von Fasern, Folien und anderen Produkten aus löslicher Cellulose bekannt, die man durch enzymatische Behandlung mittels cellulolytischer Enzyme des Cellulasetyps von Pilzen Aspergillus Niger IBT erhielt. Die enzymatische Behandlung des Zellstoffs erfolgt bei Temperaturen nicht unter 10°C während einer Zeit von nicht weniger als einer Minute bei einem pH-Wert von 4-7. Diese modifizierte Cellulose löst sich in wässrigen Alkalilösungen bei einer Temperatur von -10°C bis 10°C in 15 bis 2880 Minuten. Die erhaltene Celluloselösung wird filtriert, entlüftet und dann in einem sauren Bad koaguliert.

Das enzymatische Verfahren hat Schwierigkeiten, einen hohen Löslichkeitsgrad der modifizierten Cellulose zu erreichen, und benötigt den Einsatz teurer Enzyme, die Herstellung der Cellulosespinnlösung erfordert lange Mischungszeiten und eine niedrige Aufbewahrungstemperatur; die erhaltene Lösung ist durch eine geringe Stabilität gekennzeichnet.

Aufgabe der vorliegenden Erfindung ist die Schaffung eines Verfahrens zur Herstellung von Celluloseformkörpern insbesondere Fasern, Folien, Schlauchhüllen, Kügelchen aus Cellulose, das die oben genannten Nachteile der bekannten Verfahren vermeidet. Eine weitere Aufgabe der Erfindung ist die Schaffung eines Verfahrens zur Herstellung von Celluloseformlingen aus einer Cellulose, die in einer alkalischen Lösung ausreichend löslich ist. Ein weiteres Ziel der vorliegenden Erfindung ist die Schaffung eines Verfahrens zur Herstellung cellulosischer Fasern, Folien, Hüllen, Kügelchen usw. aus Cellulose, das technologisch einfach, ohne Verwendung toxischer Substanzen ökologisch sicher und nicht durch einen hohen Verbrauch an Energie oder Enzymen kostspielig ist.

Diese und andere Aufgaben werden durch die vorliegende Erfindung gelöst. Die Erfindung schafft ein verbessertes Verfahren zur Herstellung von Formkörpern, wie Fasern, Folien, Schlauchhüllen, Kügelchen und anderen Gegenständen aus Cellulose, dadurch gekennzeichnet, daß man

(a) die Ausgangscellulose mit Wasser in einem Wasser/Celluloseverhältnis auf Gewichtsbasis von wenigstens 1 bei einer Temperatur in dem Bereich von 100 bis 200°C und unter einem Druck in dem Bereich von 0,1 bis 1,5 MPa hydrothermisch behandelt,

(b) die behandelte Cellulose in einer wässrigen Alkalilösung bei wenigstens 0°C zu einer homogenen Celluloselösung mit 5 bis 10 Gew.-% Cellulose und maximal 10 Gew.-% Alkalihydroxid löst und

(c) die alkalische Celluloselösung verformt und durch Berührung mit einer wässrigen Lösung mit 1 bis 30 Gew.-% anorganischer und/oder organischer Säure koaguliert.

Vorzugsweise liegt die Temperatur in der Stufe (a) für die hydrothermale Behandlung des Zellstoffs in dem Bereich von 100 bis 160°C. Das Wasser/Celluloseverhältnis auf Gewichtsbasis ist vorzugsweise nicht kleiner als 15:1 und liegt insbesondere in dem Bereich von 15:1 bis 50:1. Das Verfahren der Erfindung bewirkt eine hydrolytische Modifizierung des Zellstoffs, die sich durch eine Verringerung des Zahlenwertes seines mittleren Polymerisationsgrades zeigt, und eine Trennung von Bindungen zwischen den Celluloseketten, die größtenteils Wasserstoffbrückenbindungen sind. Diese hydrolytisch modifizierte Cellulose mit geänderter molekularer und supermolekularer Struktur ist durch ihre Fähigkeit gekennzeichnet, sich unter Bildung stabiler Spinnlösungen geeigneter Viskosität direkt in wässrigen Alkalilösungen zu lösen. Diese cellulosischen Lösungen sind zur Herstellung von Fasern, Folien, Hüllen, Kügelchen usw. bestens geeignet. Die modifizierte Cellulose löst sich in wässrigen alkalischen Lösungen.

Die Stufe in (c) zur Koagulierung der Cellulose der alkalischen Celluloselösungen benutzte wässrige Lösung enthält üblicherweise eingesetzte Säuren aus der aus Schwefelsäure, Chlorwasserstoffsäure und Essigsäure alleine oder einem Gemisch daraus bestehenden Gruppe.

Das Verfahren der Erfindung erlaubt den Einsatz eines zuvor nicht getrockneten Ausgangszellstoff für die hydrothermale Behandlung.

Vorzugsweise wird die Celluloselösung zwischen den Stufen (b) und (c) filtriert und/oder entlüftet. Dies ist zweckmässig, um eine Lösung für eine störungsfreie Ausführung der Stufe (c), insbesondere eine Verspinnungs- oder Extrusionsstufe zu erhalten. Vorzugsweise wird in der Stufe (b) eine Celluloselösung mit einem Filtrierbarkeitskoeffizienten von nicht mehr als 1.000 und einer Stabilität bei 20°C von wenigstens 48 Stunden hergestellt. Durch die Filtration der Lösung wird der Filtrierbarkeitskoeffizient auf einem Wert zwischen 0 und 50 herabgesetzt. Die Stabilität der Spinnlösung von wenigstens 48 Stunden genügt für die Durchführung der Filtration und/oder Entlüftung der Lösung und der folgenden Bildung der Celluloseprodukte. Üblicherweise werden die in der Stufe (c) koagulierten Celluloseprodukte anschließend mit Wasser gewaschen und getrocknet.

Nach einer bevorzugten Ausführungsform des erfindungsgemäßen Verfahrens wird die Dauer der hydrothermischen Behandlung in den Bereichen von 0,5 bis 10 Stunden, insbesondere in dem Bereich von 2 bis 6 Stunden ausgewählt.

Ein weiteres typisches Merkmal des erfindungsgemäßen Verfahrens besteht darin, daß man das Gemisch aus Cellulose und Wasser am Ende der hydrothermischen Behandlung nicht-explosiv auf Atmosphärendruck entspannt. Die hydrothermale Stufe (a) kann diskontinuierlich in einem gewöhnlichen Autoklaven oder kontinuierlich in einer Druckschleuse durchgeführt werden. Die Entspannung des hydrothermalen Behandlungsgemisches beim kontinuierlichen und diskontinuierlichen Verfahren kann dadurch erreicht werden, daß man den Wasserdampf aus dem Gemisch abbläst, indem man das Autoklavenventil öffnet. Zweckmässigerweise wird das hydrothermale Behandlungsgemisch in einem Zeitintervall in dem Bereich von 1 bis 30 Minuten insbesondere 5 bis 15 Minuten entspannt. Die Entspannungszeit hängt ab von dem Druck, unter dem die hydrothermale Behandlung durchgeführt wird, und von dem Volumen der Charge. Die Entspannungsgeschwindigkeit sollte so begrenzt werden, daß der hydrothermal behandelte Zellstoff nicht zusammen mit dem abgeblasenen Dampf ausgetragen wird.

Vorzugsweise wird die hydrothermale Behandlung der Stufe (a) bei einer Temperatur in dem Bereich von 120 bis 180°C, insbesondere bei einer Temperatur in dem Bereich von 145 bis 165°C durchgeführt. Vorzugsweise erfolgt die hydrothermale Behandlung bei einem Druck in dem Bereich von 0,2 bis 1,0 MPa, insbesondere in dem Bereich von 0,35 bis 0,55 MPa.

Die zur Bildung der Celluloselösung in der Stufe (b) erforderliche Zeit liegt im allgemeinen in dem Bereich von 1-300 Minuten, vorzugsweise in dem Bereich von 15 bis 120 Minuten.

Nach einer bevorzugten Ausführungsform der Erfindung ist vorgesehen, daß vor der Stufe (a) der Ausgangszellstoff einer Zerfaserungs- und Quellungsbehandlung bei einer Temperatur von mindestens 10°C während einer Zeit in dem Bereich von einer Minute bis 24 Stunden in Gegenwart von Wasser unterworfen wird. Diese Vorbehandlung vor der hydrothermalen Stufe verursacht eine Auflockerung der Celluloseketten für die anschließende Einwirkung hochenergetischer Wassermoleküle, die in die Struktur des Polymeren eindringen und die intermolekularen Wasserstoffbindungen aufbrechen. Diese Vorbehandlung erfolgt mit Vorteil unter Rührung.

Vorzugsweise erhält man durch die hydrothermale Behandlung in der Stufe (a) eine Cellulose mit einem mittleren Gewichtspolymerisationsgrad von wenigstens 200, einem Sekundärquellungsindex in dem Bereich von 60 bis 100 %, einem Kristallinitätsindex von nicht mehr als 75 % und einer Wasserstoffbindungsenergie in dem Bereich von 15 bis 21 kJ/Mol.

Bei einer weiteren Ausführungsform des erfindungsgemäßen Verfahrens wird die Cellulose in der Stufe (b) in einer Alkalihydroxidlösung gelöst, die maximal 5 Gew.-% Zinkverbindungen und/oder maximal 10 Gew.-% Harnstoff enthält. Zinkoxid ist die bevorzugte Zinkverbindung, die mit Vorteil in dem Koagulationsbad zur Anwendung kommt. Der Zusatz von Zinkverbindungen und/oder Harnstoff zu der Alkalihydroxidlösung erhöht die Stabilität der Lösung.

Nach einer weiteren bevorzugten Ausführungsform des Verfahrens wird die Celluloselösung in Stufe (c) in einer wässrigen Säurelösung koaguliert, die 1 bis 25 Gew.-% Salze organischer und/oder anorganischer Säure(n) enthält. Bevorzugte Salze für den Einsatz in dem Koagulationsbad sind Natriumacetat, Natriumsulfat, Aluminiumsulfat, Natriumchlorid und Aluminiumchlorid.

Nach einer weiteren Ausführungsform des erfindungsgemäßen Verfahrens ist vorgesehen, daß man

in Stufe (c) die Celluloselösung durch eine Ringschlitzdüse zu einer schlauchförmigen Hülle verformt und
in das Innere der Hülle ein Koagulationsbad mit einem Gehalt von 5 bis 20 Gew.-% Säure, 5 bis 20 Gew.-% Natriumsalz und einer Temperatur in dem Bereich von 20 bis 95°C einführt,

(d) die koagulierte Cellulosehülle in einem wässrigen Bad bei einer Temperatur in dem Bereich von 20 bis 95°C in dem Bereich bis zu 100 % ihrer ursprünglichen Länge verstreckt und
(e) nach Entfernung des Koagulationsbades aus ihrem Inneren bei einer Temperatur in dem Bereich von 20 bis 80°C mit mehrwertigen Alkoholen behandelt.

Nach diesem Aspekt der Erfindung wird die gebildete schlauchförmige Hülle in Stufe (c) nicht nur mit einem äußeren Koagulationsbad, sondern auch mit einer Koagulationsbadflüssigkeit in Kontakt gebracht, die durch die Extrusionsdüse in das Innere der Hülle eingeführt wird. Die verbrauchte innere Koagulationsbadflüssigkeit wird durch die Düse wieder abgezogen, so daß im Inneren der Düse eine Austausch der Koagulationsflüssigkeit aufrechterhalten wird. Die in dem inneren Koagulationsbad einsetzbaren Säuren können die gleichen sein, wie sie in dem äußeren Bad benutzt werden, nämlich anorganische Säuren, vorzugsweise Schwefelsäure, und/oder organische Säuren, vorzugsweise Essigsäure. Das innere Koagulationsbad enthält Natriumsalz(e), anorganischer und/organischer Säuren, vorzugsweise Natriumsulfat oder Natriumacetat. Das innere Koagulationsbad kann Harnstoff in gleichen Mengen wie oben angegeben enthalten.

Die Koagulation der Cellulosehülle in Stufe (c) erfolgt vorzugsweise bei einer Temperatur des äußeren Bades in dem Bereich von 20 bis 95°C. Das äußere Koagulationsbad enthält vorzugsweise 5 bis 30 Gew.-% einer Säure, vorzugsweise Schwefelsäure und/oder Essigsäure, 1 bis 25 Gew.-% Natriumsalz, vorzugsweise Natriumsulfat oder Natriumacetat, sowie gegebenenfalls Harnstoff in Mengen von 0,1 bis 10 Gew.-%.

Die gebildete Cellulosehülle wird in dem Bereich von 0 bis 100 % verstreckt (Verzugsverhältnis 1:1 bis 2:1). Die Verstreckung erfolgt in einem wässrigen Bad mit möglicher Zugabe einer Säure in einer Menge von nicht mehr als 10 Gew.-%. Nach Entfernung des aus der Koagulations- und/oder Verstreckungsstufe stammenden überschüssigen Säurebades wird die Hülle einer Plastifizierung unterworfen, indem sie mit einem Medium, das wenigstens einen mehrwertigen Alkohol aufweist, bei einer Temperatur in dem Bereich von 20 bis 80°C in Berührung gebracht. Das mehrwertig-alkoholische Medium ist eine wässrige Lösung der Alkohole. Die bevorzugte Konzentration des bzw. der mehrwertigen Alkohole in der Lösung des Plastifizierungsbades liegt in dem Bereich von 2 bis 50 Gew.-%, vorzugsweise 5 bis 20 Gew.-%. Die Endstufe umfaßt eine oder mehrere Abschlußbehandlungen, die aus der aus Waschen mit Wasser, Fältchenbildung und Trocknung bestehenden Gruppe ausgewählt sind.

Bei dem Hüllenbildungsverfahren der Erfindung tritt infolge der Anwendung der beiden Koagulationsbäder eine gleichzeitige Koagulation und Regenerierung der äußeren und inneren Schicht der gebildeten Hülle ein. Dies verhindert das Aneinanderkleben der Innenseite der Hülle, wenn diese flach gelegt wird.

Diese Ausführungform des Verfahrens der Erfindung erlaubt die Herstellung von Cellulosehüllen, die hauptsächlich für die Verpackung von Nahrungsmitteln, wie Wurst oder Käse bestimmt sind.

Die Vorteile des erfindungsgemäßen Verfahrens sind

(i) ein vollkommen ökologisches Verfahren ohne Umgang mit toxischen Produkten oder Nebenprodukten;
(ii) die Benutzung billiger wässriger Lösungsmittel anstelle kostspieliger organischer Lösungsmittel;
(iii) die Bildung einer beständigen echten Celluloselösung ohne die Notwendigkeit der Bildung eines Cellulosederivats; und
(iv) die Beständigkeit der Lösung für wenigstens 48 Stunden, was für ihre Filtration, Entlüftung und weitere Verarbeitung zu Fasern, Schlauchhüllen, Kügelchen usw. ausreichend ist.

Das Verfahren der Erfindung erlaubt die Bildung einfacher und gerunzelter Cellulosehüllen unter Benutzung vollständig ökologischer und technologisch einfacher Verfahrensstufen.

Die Erfindung wird im einzelnen durch die folgenden Beispiele erläutert, die den Umfang der Erfindung nicht begrenzen sollen.

Für die Bestimmung der Eigenschaften der Cellulose und der aus ihr hergestellten Erzeugnisse fanden folgende Methoden Anwendung:

- der mittlere Cellulosepolymerisationsgrad $\overline{DP}_W$* wurde nach der in der Zeitschrift „Das Papier" Nr. 12, S. 187; 1958 beschriebenen Methode bestimmt;
- der Sekundarquellungsindex WRV wurde nach der in der Zeitschrift „Cellulose Chemistry and Technology", Band 14, S. 893; 1980 beschriebenen Methode bestimmt;
- der Kristallinitätsindex KrI wurde röntgenographisch bestimmt nach der Monographie „Mikrostruktura Włókna" Wydawnictwo Naukowo-Techniczne, Warszawa („Fasermikrostruktur", Wissenschaftlich-Technischer Verlag Warschau), S. 68,; 1988;
- der Filtrierbarkeitskoeffizient $K_W$* wurde bestimmt gemäß Norm BN-70/7516-03;
- die mechanischen Eigenschaften der Fasern und Folien wurden bestimmt gemäß PN (Polnische Norm) 83/P-04653 und PN-84/P-04654.

Beispiel 1

200 Gewichtsteile lufttrockener Zellstoff des Ketchikan-Typs in Form von Blättern mit einem mittleren Gewichtspolymerisationsgrad $DP_W$ = 577, einem Kristallinitätsindex KrI = 72 %, einem Wasserrückhaltewert WRV = 60 % und einer Wasserstoffbindungsenergie $E_H$ = 12,3-14,5 kJ/Mol und einem Feuchtigkeitsgehalt von 21,4 Gew.-% wurden in einem Mischer mit 400 Gewichtsteilen Wasser 10 Minuten bei 20°C zerfasert. Die erhaltene Dispersion wurde zur Quellung der Cellulosefasern bei dieser Temperatur 16 Stunden stehengelassen und dann in einem Autoklaven 3 Stunden bei 151°C unter einem Druck von 0,4 MPa hydrothermal behandelt. Dann wurde die Cellulosedispersion filtriert, mit Wasser gewaschen und bei 46°C 6 Stunden getrocknet. 200 Gewichtsteile des modifizierten Zellstoffs mit 10 Gew.-% Feuchtigkeit und einem mittleren Gewichtspolymerisationsgrad $\overline{DP}_W$ = 393, einem Kristallinitätsindex KrI = 70 %, einem WRV = 63 % und einem $E_H$ = 15,64-17,97 kJ/Mol wurde erhalten. Dann wurden 33 Gewichtsteile des modifizierten Zellstoffs in einen Mischer eingeführt, der 283 Gewichtsteile Wasser von 3°C enthielt, worauf 283 Gewichtsteile wässriger Natriumhydroxidlösung bei ständiger Rührung mit 150 UpM eingeführt wurden. Die Lösung hatte eine Konzentration von 18 Gewichtsprozent NaOH und eine Temperatur von -5°C und enthielt 0,13 Gewichtsprozent Zinkoxid. Der Vorgang der Auflösung der Cellulose in der Natriumhydroxidlösung erstreckte sich über 30 Minuten. Man erhielt eine alkalische Celluloselösung bei einer Temperatur von 6°C, die gekennzeichnet war durch einen Gehalt an $\alpha$-Cellulose von 5,11 Gew.-%, einen Natriumhydroxidgehalt von 8,68 Gew.-%, eine Viskosität bei 20°C von 13 Sekunden, eine Reife von 8,5°H* und einem reduzierten Wert des Filtrierbarkeitskoeffizienten $K_W$* von 397. Die Lösung wurde durch einen Plattenfilter filtriert und dann 16 Stunden bei 15°C entlüftet. Aus dieser Lösung mit einer Viskosität von 17 s, einer Reife von 6,5°H* und einem $K_W$* = 9 wurden in einer wässrigen Schwefelsäurelösung einer Konzentration von 23 Gew.-% bei 20°C unter Benutzung einer 60-Loch-Spinndüse Cellulosefasern geformt. Der Durchmesser der Löcher war 0,08 mm, und die Lineargeschwindigkeit betrug 11,6 m/min. Die gebildeten Fasern wurden mit Wasser gewaschen und getrocknet.

Man erhielt Cellulosefasern mit einer Festigkeit im konditioniertem Zustand von 5,2 cN/tex, einer Schlingenfestigkeit von 3,6 cN/tex, einer Dehnung von 29 % und einem WRV = 116 %.

Beispiel 2

200 Gewichtsteile lufttrockener Zellstoff des Ketchikan-Typs mit den in Beispiel 1 angegebenen Eigenschaften wurden in einem Mischer mit 3000 Gewichtsteilen Wasser bei 20°C 10 Minuten zerfasert. Die erhaltene Zellstoffdispersion wurde 16 Stunden auf dieser Temperatur gehalten und dann in einem Autoklaven 4,5 Stunden bei 150°C unter einem Druck von 0,41 MPa hydrothermal behandelt. Nach Ende der Behandlung wurde die modifizierte Cellulose mit Wasser gewaschen und 6 Stunden bei 46°C getrocknet. 400 Gewichtsteile der getrockneten, modifizierten Cellulosemasse mit einem $\overline{DP}_W$ = 307, einem KrI = 67 % und einem $E_H$ = 15,86-18,01 kJ/Mol wurden in einen Mischer eingeführt, der 2890 Gewichtsteile Wasser bei einer Temperatur von 7°C und 330 Gewichtsteile darin gelösten Harnstoff enthielt. Unter ständiger Rührung wurden in den Mischer 2710 Gewichtsteile einer wässrigen Natriumhydroxidlösung einer Konzentration von 18 Gewichtsprozent und einer Temperatur von -10°C und einem Gehalt von 1 Gewichtsprozent Zinkoxid eingeführt. Die Auflösung der Cellulose in der Natriumhydroxidlösung wurde 60 Minuten fortgesetzt. Man erhielt eine alkalische Celluloselösung von 8°C, mit 6,13 Gew.-% $\alpha$-Cellulose und 8,74 Gew.-% Natriumhydroxid. Die Lösung war gekennzeichnet durch eine Viskosität bei 20°C von 16 Sekunden und eine Reife von 6,0°H*. Die Lösung wurde auf einer Rahmenpresse filtriert und dann 16 Stunden bei 13°C entlüftet. Aus der so hergestellten Lösung mit einer Viskosität von 12 s, einer Reife von 6,0°H* und einem Filtrierbarkeitskoeffizienten $K_W$* = 0 wurden Cellulosefasern in einem 3-Bad-System gebildet. Das System benutzte als erstes Bad eine wässrige Lösung von 23 Gew.-% Schwefelsäurelösung und 5 Gew.-% Natriumsulfat von 28°C und als zweites und drittes Bad destilliertes Wasser bei einer Temperatur von 25°C. Die Fasern wurden unter Benutzung einer Platin/Rhodium-Düse mit einem Lochdurchmesser von 0,06 mm und einer Lineargeschwindigkeit von 40 m/min gebildet. Die erzeugten Fasern wurden mit Wasser gewaschen und getrocknet.

Man erhielt Cellulosefasern mit einer linearen Masse von 1,67 dtex, einer Festigkeit im konditioniertem Zustand von 12,2 cN/tex, einer Schlingenfestigkeit von 2,87 cN/tex, einer Dehnung von 12,6 % und einem WRV = 106 %.

Beispiel 3

Zellstoff mit den in den Beispiel 1 angegebenen Eigenschaften wurde wie in Beispiel 2 der Zerfaserung, hydrothermalen Behandlung und Auflösung in einer wässrigen Natriumhydroxidlösung unterworfen. Nach Filtration und Entlüftung wurde wie in Beispiel 2 eine alkalische Celluloselösung erhalten. Aus der Lösung wurden in einem 3-Bad-System Cellulosefasern gebildet. Als erstes Bad diente eine wässrige Koagulationslösung mit 20 Gew.-% Schwefelsäure, 24 Gew.-% Natriumsulfat und 10 Gew.-% Aluminiumsulfat. Als zweites Bad diente Wasser von 30°C und als drittes Bad Wasser von 40°C. Die Fasern wurden wie in Beispiel 2 unter Benutzung einer Platin/Rhodium-Düse gebildet. Die erzeugten Fasern wurden mit Wasser gewaschen und getrocknet.

Man erhielt Cellulosefasern mit einer Linearmasse von 2,25 dtex, einer Festigkeit im konditioniertem Zustand von 10 cN/tex, einer Schlingenfestigkeit von 4,22 cN/tex, einer Dehnung von 15,6 % und einem WRV = 111 %.

Beispiel 4

200 Gewichtsteile lufttrockener Zellstoff des Ketchikan-Typs mit den in Beispiel 1 angegebenen Eigenschaften wurden in einem Mischer in 4000 Gewichtsteilen Wasser 20 Minuten bei 25°C zerfasert. Die wässrige Dispersion der Cellulose wurde 24 Stunden bei dieser Temperatur belassen. Dann wurde Sie in einem Autoklaven 3 Stunden einer hydrothermalen Behandlung bei 160°C unter einem Druck von 0,5 MPa unterworfen. Nach Ende der Behandlung wurde die modifizierte Cellulose mit Wasser gewaschen und 6 Stunden bei 46°C getrocknet. Dann wurde die modifizierte Cellulose mit $DP_W$ = 290, KrI = 67 % und EH = 15,97-17,08 kJ/Mol wie in Beispiel 1 in einer wässrigen Natriumhydroxidlösung gelöst, die Harnstoff enthielt. Die erhaltene alkalische Celluloselösung enthielt 5,96 Gew.-% $\alpha$-Cellulose und 8,52 Gew.-% Natriumhydroxid bei einer Viskosität von 16 Sekunden und einer Reife von 6°H*. Die Lösung wurde wie in Beispiel 2 filtriert und geformt.

Man erhielt Cellulosefasern mit einer linearen Masse von 3,27 dtex, einer Festigkeit im konditionierten Zustand von 9,11 cN/tex, einer Schlingenfestigkeit von 2,17 cN/tex, einer Dehnung von 15 % und einem WRV von 105 %.

Beispiel 5

Aus der in Beispiel 4 erhaltenen alkalischen Celluloselösung wurde unter Benutzung einer Schlitzdüse mit einer Geschwindigkeit von 35 m/min. eine Cellulosefolie der Dimension 35 mm x 0,1 mm gebildet. Das Koagulationsbad hatte eine Temperatur von 21°C und enthielt 14 Gew.-% Schwefelsäure und 8 Gew.-% Natriumsulfat. Als zweites Koagulationsbad diente Wasser von 60°C. In diesem Bad wurde eine 100-prozentige Streckung durchgeführt.

Man erhielt eine Folie mit einer mittleren Dicke von 0,015 mm, einer Festigkeit von 36 MPa und einer Dehnung von 6 %.

Beispiel 6

Eine wie in Beispiel 4 hergestellte, hydrothermal modifizierte Cellulose wurde in einer wässrigen Natriumhydroxidlösung unter den in Beispiel 2 angegebenen Bedingungen gelöst. Aus der erhaltenen alkalischen Celluloselösung mit 6,98 Gew.-% $\alpha$-Cellulose und 9,8 Gew.-% Natriumhydroxid, einer Viskosität bei 20°C von 44 Sekunden, einer Reife von 6,0°H* und einem kW* = 90 wurden unter Laborbedingungen durch Ausbreiten der Lösung auf Glasplatten Folien gebildet. Die Filme wurden in einem Bad mit 30 Gew.-% Schwefelsäure koaguliert und anschließend bei Raumtemperatur mit Wasser unter einem schwachen Spannungszustand gewaschen.

Man erhielt Cellulosefolien mit einer mittleren Dicke von 0,015 mm, einer Festigkeit von 64 MPa und einer Dehnung von 2,8 %.

Beispiel 7

Aus der in Beispiel 6 erhaltenen alkalischen Celluloselösung wurden mittels eines Geräts mit einer Viel-Loch-Spinndüse mit einem Lochdurchmesser von 0,5 mm in einem Koagulationsbad Kügelchen geformt. Das Koagulationsbad bestand aus einer wässrigen Lösung von 30 Gew.-% Chlorwasserstoffsäure und enthielt 6 g/l Wasserstoffperoxid als porenbildendes Mittel. Die hergestellten porösen Cellulosekügelchen wurden mit Wasser gewaschen und anschließend in einem Vakuumgefriertrockner getrocknet.

Man erhielt Kügelchen mit einem Durchmesser von 3 mm und einem WRV = 162 %.

Beispiel 8

Die in Beispiel 4 hergestellte, hydrothermisch modifizierte Cellulose wurde wie in Beispeil 2 in einer wässrigen Lösung von 9,0 Gew.-% Natriumhydroxid gelöst, wobei die Konzentration der $\alpha$-Cellulose in der Lösung erhöht wurde. Aus der erhaltenen alkalischen Celluloselösung mit 7,15 Gew.-% $\alpha$-Cellulose und 8,90 Gew.-% Natriumhydroxid, einer Viskosität bei 20°C von 49 Sekunden, einer Reife von 6,0°H* und einem $K_W$* = 287 wurde unter Laborbedingungen eine Folie gebildet und in einem Bad von 30 Gew.-% Schwefelsäure bei 15°C koaguliert.

Man erhielt eine Cellulosefolie mit einer mittleren Dicke von 0,016 mm, einer Festigkeit von 82 MPa und einer Dehnung von 5,3 %.

Beispiel 9

200 Gewichtsteile Zellstoff des Ketchikan-Typs wurden wie in Beispiel 1 vorbehandelt und hydrothermal behandelt. 50 Gewichtsteile des modifizierten Zellstoffs wurden in einen Mischer gegeben, der 380 Gewichtsteile Wasser von 3°C enthielt. Dann wurden unter ständiger Rührung mit 200 UpM 400 Gewichtsteile einer wässrigen, 18 Gew.-% Natriumhydroxidlösung mit einer Temperatur von -5°C und einem Gehalt von 0,13 Gew.-% Zinkoxid eingeführt. Die Auflösung wurde 30 Minuten fortgesetzt, wobei man eine alkalische Celluloselösung von 6°C erhielt, die gekennzeichnet war durch einen $\alpha$-Cellulosegehalt von 6,0 Gew.-%, einen NaOH-Gehalt von 8,0 Gew.-%, eine Viskosität von 60 s, einen Reifegrad von 9°H* und einen reduzierten Filtrierbarkeitskoeffizienten $K_W$* von 420. Die Lösung wurde durch einen Tellerfilter filtriert und dann bei einer Temperatur von 15°C 24 Stunden entlüftet. Die so vorbereitete Lösung mit einer Viskosität von 72 s, einem Reifegrad von 7,5°H* und einem $K_W$* = 12 wurde unter Benutzung einer ringförmigen Düse und eines Koagulationsbades von 20°C zu einer schlauchförmigen Hülle verformt. Das Bad enthielt 12 Gew.-% Schwefelsäure, 5 % Natriumsulfat und 0,5 Gew.-% Harnstoff. Gleichzeitig wurde in das Innere der geformten Hülle ein Koagulationsbad von 25°C eingeführt, das 5 Gew.-% Schwefelsäure und 25 % Gew.-% Natriumsulfat enthielt. Die gebildete Hülle wurde in einem wässrigen, 25 Gew.-% Schwefelsäure enthaltenden Bad von 50°C einer Gesamtstreckung von 60 % unterzogen. Dann wurde das innere Koagulationsbad entfernt. Die leere Hülle wurde in ein Plastifizierungsbad von 60°C gebracht, das aus einer wässrigen 10 %igen Lösung von Glyzerin und Propylenglykol in einem Gewichtsverhältnis von 1:1 bestand. Nach der Plastifizierung wurde die Cellulosehülle gewaschen, es wurde erneut Plastifizierungsavivage aufgetragen, die aus einer wässrigen 20 %igen Lösung von Propylenglykol bestand. Dann wurde die Hülle getrocknet.

Als Erzeugnis erhielt man 58,5 Gewichtsteile Cellulosehülle mit 4,5 Gew.-% Plastifizierungsavivage und 6 Gew.-% Feuchtigkeit. Die Hülle war durch eine Bruchfestigkeit von 63,7 MPa und eine Dehnung von 9,5 % gekennzeichnet.

**Patentansprüche**

1. Verfahren zur Herstellung von Formkörpern, wie Fasern, Folien, Schlauchhüllen, Kügelchen und dergl. aus Cellulose, dadurch gekennzeichnet, daß man

   (a) die Ausgangscellulose mit Wasser in einem Wasser/Cellulose-Verhältnis von wenigstens 1 bei einer Temperatur in dem Bereich von 100 bis 200°C und unter einem Druck in dem Bereich von 0,1 bis 1,5 MPa hydrothermisch behandelt,
   (b) die behandelte Cellulose in einer wässrigen Alkalihydroxidlösung bei wenigstens 0°C zu einer homogenen Celluloselösung mit 5-10 Gew.-% Cellulose und maximal 10 Gew.-% Alkalihydroxid löst und
   (c) die alkalische Celluloselösung formt und durch Berührung mit einer wässrigen Lösung mit 1 bis 30 Gew.-% anorganischer und/oder organischer Säure koaguliert.

2. Verfahren nach Anspruch 1, dadurch gekennzeichnet, daß man die Celluloselösung zwischen den Stufen (b) und (c) filtriert und/oder entlüftet.

3. Verfahren nach Anspruch 1 oder 2, dadurch gekennzeichnet, daß man in der Stufe (b) eine Celluloselösung mit einem Filtrierbarkeitskoeffizienten von maximal 1000 und einer Stabilität bei 20°C von mindestens 48 Stunden herstellt.

4. Verfahren nach einem der Ansprüche 1 bis 3, dadurch gekennzeichnet, daß man das in Stufe (c) koagulierte Produkt mit Wasser wäscht und gegebenenfalls trocknet.

5. Verfahren nach einem der Ansprüche 1 bis 4, dadurch gekennzeichnet, daß man die hydrothermische Behandlungsdauer in dem Bereich von 0,5 bis 10 Stunden, vorzugsweise von 2 bis 7 Stunden auswählt.

6. Verfahren nach einem der Ansprüche 1 bis 5, dadurch gekennzeichnet, daß man das Gemisch aus Cellulose und Wasser am Ende der hydrothermischen Behandlung nichtexplosiv auf Atmosphärendruck entspannt.

7. Verfahren nach einem der Anspruch 6, dadurch gekennzeichnet, daß man das hydrothermische Behandlungsgemisch in einem Zeitraum in dem Bereich von 1 bis 30 Minuten entspannt.

8. Verfahren nach einem der Ansprüche 1 bis 7, dadurch gekennzeichnet, daß man die hydrothermische Behandlung bei einer Temperatur in dem Bereich von 120 bis 180°C durchführt.

9. Verfahren nach einem der Ansprüche 1 bis 8, dadurch gekennzeichnet, daß man die hydrothermische Behandlung bei einem Druck in dem Bereich von 0,2 bis 1,0 MPa durchführt.

10. Verfahren nach einem der Ansprüche 1 bis 9, dadurch gekennzeichnet, daß man die Celluloselösung in Stufe (b) in einer Zeit in dem Bereich von 1 bis 300 Minuten bildet.

11. Verfahren nach einem der Ansprüche 1 bis 10, dadurch gekennzeichnet, daß man die Ausgangscellulose vor der Stufe (a) mit Wasser bei wenigstens 10°C eine Minute bis 24 Stunden lang einer Zerfaserung und Quellung unterzieht.

12. Verfahren nach einem der Ansprüche 1 bis 11, dadurch gekennzeichnet, daß man durch die Behandlung in Stufe (a) eine Cellulose mit einem mittleren Gewichtspolymerisationsgrad von wenigstens 200, einem Sekundärquellungsindex in dem Bereich von 60 bis 100 %, einem Kristallinitätsindex von nicht mehr als 75 % und einer Wasserstoffbrückenbindungsenergie in dem Bereich von 15 bis 21 kJ/Mol erhält.

13. Verfahren nach einem der Ansprüche 1 bis 12, dadurch gekennzeichnet, daß man die Cellulose in der Stufe (b) in einer Alkalihydroxidlösung löst, die maximal 5 Gew.-% Zn-Verbindungen und/oder maximal 10 Gew.-% Harnstoff enthält.

14. Verfahren nach einem der Ansprüche 1 bis 13, dadurch gekennzeichnet, daß man die Celluloselösung in Stufe (c) in einer wässrigen Säurelösung koaguliert, die 1 bis 25 Gew.-% Salze organischer und/oder anorganischer Säuren enthält.

15. Verfahren nach einem der Ansprüche 1 bis 14, dadurch gekennzeichnet, daß man

   in der Stufe (c) die Celluloselösung durch eine Ringschlitzdüse zu einer schlauchförmigen Hülle verformt und
   in das Innere der Hülle ein Koagulationsbad mit einem Gehalt von 5 bis 20 Gew.-% Säure, 5 bis 20 Gew.-% Natriumsalz und einer Temperatur in dem Bereich von 20 bis 95°C einführt,

(d) die koagulierte Cellulosehülle in einem wässrigen Bad bei einer Temperatur in dem Bereich von 20 bis 95°C in einem Bereich bis zu 100 % ihrer ursprünglichen Länge verstreckt und

(e) nach Entfernung des Koagulationsbades aus ihrem Inneren bei einer Temperatur in dem Bereich von 20 bis 80°C mit mehrwertigen Alkoholen behandelt.

16. Verfahren nach Anspruch 15, dadurch gekennzeichnet, daß man die äußere Koagulation in Stufe (c) bei einer Temperatur in dem Bereich von 20 bis 95°C durchführt.

17. Verfahren nach Anspruch 15 oder 16, dadurch gekennzeichnet, daß man die Verstreckung in Stufe (d) in einem wässrigen Bad mit maximal 10 Gew.-% Säure durchführt.

18. Verfahren nach einem der Ansprüche 15 bis 17, dadurch gekennzeichnet, daß man die Hülle nach der Stufe (e) einer Endbearbeitung durch Wasserwäsche und/oder Runzelung und/oder Trocknung unterzieht.

**Europäisches Patentamt**

# EUROPÄISCHER RECHERCHENBERICHT

Nummer der Anmeldung

EP 98 12 1809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DD 298 789 B (THUERINGISCHES INST FUER TEXTI) 21. Juli 1994 * das ganze Dokument * --- | 1-18 | D01F2/02 C08J5/18 C08L1/02 C08B1/00 A22C13/00 //C08L1:02 |
| Y | FR 891 434 A (SÜDDEUTSCHE ZELLWOLLE AG) 7. März 1944 * das ganze Dokument * --- | 1-18 | |
| Y | GB 618 584 A (SIDNEY MILTON EDELSTEIN) * das ganze Dokument * --- | 1-18 | |
| Y | GB 2 269 559 A (ASAHI CHEMICAL IND) 16. Februar 1994 * das ganze Dokument * --- | 1-18 | |
| Y | EP 0 147 634 A (ASAHI CHEMICAL IND) 10. Juli 1985 * das ganze Dokument * | 1-18 | |
| D | & US 4 634 470 A --- | | |
| Y | US 5 236 726 A (LANCASTER E PETER) 17. August 1993 * das ganze Dokument * --- | 1-18 | RECHERCHIERTE SACHGEBIETE (Int.Cl.6) |
| Y | DE 488 940 C (VISKING CORPORATION) * das ganze Dokument * --- | 15-18 | D01F C08J C08L C08B A22C |
| Y | DE 749 082 C (UNKNOWN) * das ganze Dokument * ----- | 13 | |

Der vorliegende Recherchenbericht wurde für alle Patentansprüche erstellt

| Recherchenort | Abschlußdatum der Recherche | Prüfer |
|---|---|---|
| DEN HAAG | 11. März 1999 | Tarrida Torrell, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**   EP 98 12 1809

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-03-1999

| Im Recherchenbericht angeführtes Patentdokument | | Datum der Veröffentlichung | Mitglied(er) der Patentfamilie | | Datum der Veröffentlichung |
|---|---|---|---|---|---|
| DD 298789 | B | 21-07-1994 | KEINE | | |
| FR 891434 | A | 07-03-1944 | KEINE | | |
| GB 618584 | A | | KEINE | | |
| GB 2269559 | A | 16-02-1994 | JP | 5140333 A | 08-06-1993 |
| | | | DE | 4293958 T | 21-08-1997 |
| | | | US | 5401447 A | 28-03-1995 |
| | | | CA | 2100756 A,C | 20-05-1993 |
| | | | WO | 9310171 A | 27-05-1993 |
| EP 0147634 | A | 10-07-1985 | JP | 60139873 A | 24-07-1985 |
| | | | CA | 1234105 A | 15-03-1988 |
| | | | DE | 3484897 A | 12-09-1991 |
| | | | US | 4634470 A | 06-01-1987 |
| US 5236726 | A | 17-08-1993 | US | 5605567 A | 25-02-1997 |
| DE 488940 | C | | KEINE | | |
| DE 749082 | C | | KEINE | | |

EPO FORM P0461

Für nähere Einzelheiten zu diesem Anhang : siehe Amtsblatt des Europäischen Patentamts Nr 12/82